# EUROPÄISCHE PATENTSCHRIFT

(11) **EP 3 424 748 B1**
(45) Veröffentlichungstag und Bekanntmachung des Hinweises auf die Patenterteilung: **09.06.2021**
(21) Anmeldenummer: 18167485.4
(22) Anmeldetag: 16.04.2018
(51) Int. Cl.: B60B 3/16, B60B 3/00

(54) **FAHRZEUGRAD**
BICYCLE WHEEL
ROUE DE VÉHICULE

(30) Priorität: 22.06.2017 DE 102017113826
(43) Veröffentlichungstag der Anmeldung: 09.01.2019
(73) Patentinhaber: Accuride Wheels Solingen GmbH, 42697 Solingen (DE)
(72) Erfinder: Tlauka, Patrick, 46117 Oberhausen (DE); George, Dominique, 40699 Erkrath (DE)
(74) Vertreter: Meissner, Peter E.

(56) Entgegenhaltungen:
- EP-A2- 1 162 385
- WO-A1-2016/020890
- DE-A1-102013 101 421
- US-A1- 2011 241 413

## Beschreibung

Die Erfindung betrifft ein Fahrzeugrad, aufweisend ein Felgenband und eine Radschüssel, wobei die Radschüssel ein Mittenloch zur Aufnahme der Radnabe mit konzentrisch darum angeordnetem Lochkreis zur Anordnung der Stehbolzen sowie einen Kümpel aufweist, der die Radschüssel in einen der Nabe zugekehrten inneren Wandteil und einen dem Felgenband zugekehrten äußeren Wandteil unterteilt, wobei im äußeren Wandteil eine konzentrische Belüftungslochreihe vorgesehen ist.

Das Kraftfahrzeugrad ist ein Sicherheitsbauteil und muss daher die hohen mechanischen und dynamischen Wechselbeanspruchungen im Betrieb dauerfest aufnehmen können.

Konventionelle Kraftfahrzeugräder in Stahl-Blechbauweise bestehen aus einer Radschüssel, die die Verbindung zur Radnabe sicherstellt und dem Felgenband, welches den Reifen aufnimmt.

Die Radkomponenten aus Stahl werden heutzutage ausnahmslos durch Kaltumformung im Mehrstufenverfahren (Tiefziehen, Drückwalzen, Profilieren) hergestellt. Die Radschüsseln werden auf Stufenpressen mit bis zu elf Stufen gefertigt und die Felgen durch Rollverfahren bzw. Profilieren. Dabei kommt fast ausschließlich warmgewalztes und gebeiztes Bandmaterial aus mikrolegierten Baustählen und Dualphasen-Stählen mit einer Zugfestigkeit von 400 - 600 MPa zum Einsatz. Als Fügetechnik wird häufig eine MIG - Schweißung vorgesehen. Konventionelle Stahlräder weisen eine Reihe kreisrunder Belüftungslöcher auf der- bezogen auf den Kümpel - äußeren Wandfläche auf. Aus US 2011/0241413 A1 ist ein Fahrzeugrad mit Belüftungslöcher bekannt.

Neben Lebensdauer, Steifigkeit und Gewicht der Räder spielt das Design eine wesentliche Rolle. Die Designfreiheit und Attraktivität konventioneller Stahl-Räder ist mit konventionellen Bauweisen und Werkstoffen stark eingeschränkt. Im Rahmen der Elektromobilität ist es äußerst attraktiv, leichte Fahrzeugräder zu produzieren. Kleinere Fahrzeuge ermöglichen schmalere Räder sowie geringere Radlasten. Letzteres führt zu neuen geometrischen Ausführungen.

Der Erfindung liegt nun die Aufgabe zugrunde, ein Kraftfahrzeugrad aus Stahlblech für Personenfahrzeuge anzugeben, welches sich durch ein geringes Gewicht, geringere Kosten im Vergleich zu Aluminiumrädern, hohe Gestaltungsfreiheit und Attraktivität bei gleichzeitig hoher Betriebsfestigkeit und Sicherheit auszeichnet.

Die Aufgabe wird erfindungsgemäß gelöst mit einem Fahrzeugrad aufweisend ein Felgenband und eine Radschüssel, wobei die Radschüssel ein Mittenloch zur Aufnahme der Radnabe mit konzentrisch darum angeordnetem Lochkreis zur Anordnung der Stehbolzen, sowie einen Kümpel aufweist, der die Radschüssel in einen der Nabe zugekehrten inneren Wandteil und einen dem Felgenband zugekehrten äußeren Wandteil unterteilt, wobei im äußeren Wandteil eine konzentrische Belüftungslochreihe vorgesehen ist, dadurch, dass die Radschüssel mit einem umlaufenden Flansch zur Anbindung an die Felge ausgeführt ist und aus einem metallischen Werkstoff, insbesondere aus Stahl besteht und dass in dem inneren Wandteil der Radschüssel mindestens eine weitere konzentrische Belüftungslochreihe ausgebildet ist.

Die Radschüsseln herkömmlicher Stahlräder besitzen auf der - bezogen auf den Kümpel - äußeren Wandfläche Belüftungslöcher, vorzugsweise in Form einer kreisrunden Aussparung. Diese dienen der Hitzeabfuhr, entstanden durch Bremsvorgänge. Bisher ist es aufgrund der Belastungen auf das Rad und der sehr hoher Spannungswerte nur möglich, Belüftungslöcher in dem äußeren Wandteil der Radschüssel, also auf der Kümpelaußenseite, anzubringen, d.h. der dem Felgenband zugewandten Wandfläche - bezogen auf den Kümpel.

Durch die Reduzierung des Fahrzeuggewichtes und der damit einhergehenden Reduzierung der Radlasten besteht die Möglichkeit, auch auf der Kümpelinnenseite, also im inneren Wandteil der Radschüssel zwischen dem das Mittenloch umgebenden Lockkreis und Kümpel, Belüftungslöcher einzubringen.

Die besondere Ausbildung und Anordnung der Belüftungslöcher wird dazu benutzt, die im Belastungsfall auftretenden Spannungen einzustellen und zu optimieren.

So können, gemäß einer Ausgestaltung des Fahrzeugrades, die einzelnen Belüftungslöcher im inneren Wandteil bezogen auf den äußeren Wandteil radial ausgerichtet oder auf Lücke angeordnet sein.

Vorteilhaft für die Spannungsoptimierung ist auch eine Ausgestaltung des Fahrzeugrades bei der die einzelnen Belüftungslöcher im inneren Wandteil bezogen auf den äußeren Wandteil auf einer Linie oder in einem Winkel zueinander versetzt angeordnet sind.

Gemäß einer weiteren Ausgestaltung des Fahrzeugrades weisen die Belüftungslöcher eine kreisrunde oder ovale Form auf oder sind von Radmitte zu Radaußenseite konisch mit kontinuierlich veränderlichem und/oder diskontinuierlichem Querschnitt ausgeführt. Die Ausgestaltung der Belüftungslöcher kann zum einen dazu dienen, unterschiedliche Designs und optische Anmutungen abzudecken, zum anderen werden über die Anordnung und Ausführung der Belüftungslöcher, individuell, für verschiedene Anforderungen, Performancewerte sowie Spannungen optimiert.

Gemäß einer weiteren Ausgestaltung des Fahrzeugrades ist die Radschüssel als TailoredWeldedBlank und/oder TailoredRolledBlank ausgeführt, wobei der innere Wandteil andere Eigenschaften aufweist als der äußere Wandteil, insbesondere durch unterschiedliche Werkstoffe und/oder unterschiedliche Materialstärken. Durch diesen Aufbau können unterschiedliche erforderliche Festigkeiten und Blechdicken verwendet werden, welche im Belastungsfall beispielsweise zu einer Spannungsreduktion und/oder besseren Spannungsverteilung führen.

Die Erfindung soll nachfolgend mit Bezug auf die Zeichnungen erläutert werden. Dabei zeigt:
Figur 1 perspektivisch und in der Aufsicht ein erfindungsgemäß gestaltetes Fahrzeugrad und
Figur 2 ein herkömmliches Fahrzeugrad, ebenfalls perspektivisch und in der Aufsicht.

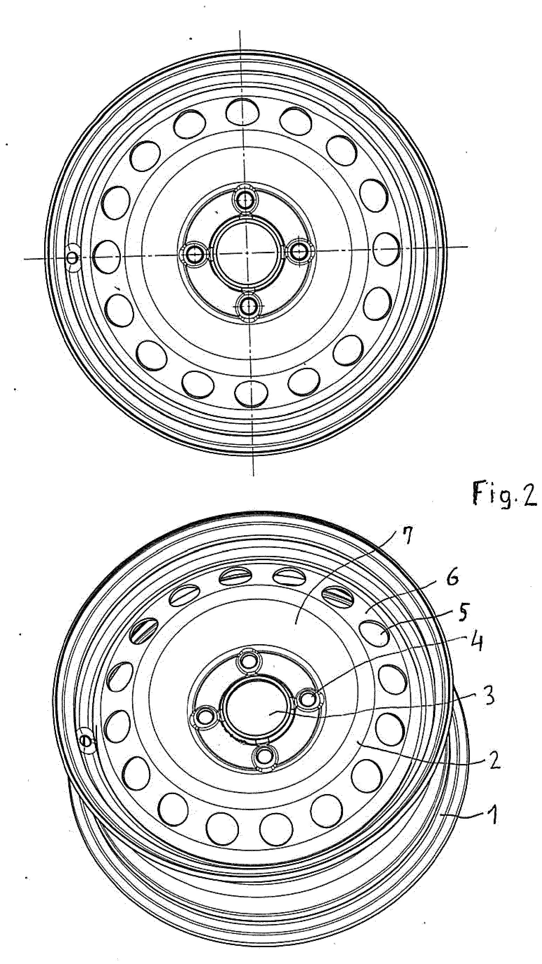

Das in der Figur 2 gezeigte, herkömmliche Fahrzeugrad weist ein Felgenband 1 und eine Radschüssel auf, die durch einen Kümpel 2, also eine Steifigkeitswelle, in eine innere Wandfläche 7, die sich zwischen dem Mittenloch 3 und dem Kümpel 2 erstreckt, und eine äußere Wandfläche 6, die zwischen Kümpel 2 und Felgenband 1 verläuft, unterteilt ist.

Im inneren Wandteil 7 ist ein das Mittenloch 3 umgebener Lochkreis 4 dargestellt, der zur Aufnahme der Stehbolzen dient, die das Rad oder genauer gesagt, die Radschüssel mit der Nabe (nicht dargestellt) verbinden.

Im äußeren Wandteil 6, also zwischen Kümpel und Felgenband, sind konzentrisch angeordnete Belüftungslöcher 5 vorgesehen.

Ein derartiges Fahrzeugrad ist ausgelegt für die üblichen Lasten und Belastungen.

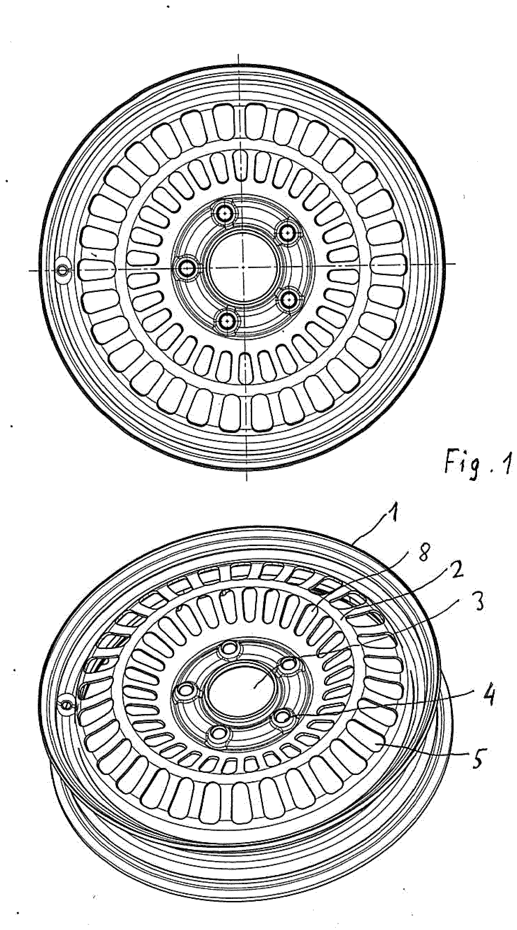

Vergleicht man diese Darstellung des herkömmlichen Fahrzeugrades mit der Darstellung des Fahrzeugrades in der Figur 1, so fällt gleich die wesentlich geringere Felgenbandbreite auf.

Durch die zusätzliche zweite Reihe der Belüftungslöcher 8, die sich in dem inneren Wandteil zwischen Lochkreis 4 und Kümpel 2 befinden, wird der Leichtbaugedanke verfolgt und Gewicht wird eingespart.

Dies wird deutlich, wenn man beispielsweise die Belüftungslochflächen * betrachtet und ein Verhältnis von innen/außen zwischen 0,5 und 0,6 ansetzt, so ergibt sich ein Verhältnis von etwa 0,72, wenn man das Schüsselgewicht ** ohne Belüftungslöcher bzw. mit Belüftungslöchern vergleicht.
* (Belüftungslochfläche der Belüftungslöcher 8 - innen - ca. 29,6 mm² Belüftungslochfläche der Belüftungslöcher 5 - außen - ca.52,2 mm²)
** (Schüsselgewicht ohne Belüftungslöcher 3,6 kg Schüsselgewicht mit Belüftungslöchern 2,6 kg)

Zum Vergleich: Bei einem Standardrad (vgl. Figur 2) liegt das Verhältnis bei etwa 0,9.

Weiterhin kann wesentlich mehr Energie (Abwärme) abtransportiert werden. Dies ist ein wichtiger Punkt für viele OEM's, um angrenzende Bauteile vor Überhitzung zu schützen.

Durch die vorgeschlagene Bauweise ist es somit möglich, die konventionell hergestellte Radschüssel und Felge aus Stahl mit weniger Materialeinsatz zu produzieren.

## Patentansprüche

1. Fahrzeugrad, aufweisend ein Felgenband (1) und eine Radschüssel (2,6,7), wobei die Radschüssel ein Mittenloch (3) zur Aufnahme einer Radnabe mit konzentrisch darum angeordnetem Lochkreis (4) zur Anordnung der Stehbolzen, sowie einen Kümpel (2) aufweist, der die Radschüssel in einen der Nabe zugekehrten inneren Wandteil (7) und einen dem Felgenband zugekehrten äußeren Wandteil (6) unterteilt, wobei im äußeren Wandteil (6) eine konzentrische Belüftungslochreihe (5) vorgesehen ist,
wobei die Radschüssel (2,6,7) mit einem umlaufenden Flansch zur Anbindung an das Felgenband (1) ausgeführt ist und aus einem metallischen Werkstoff besteht und in dem inneren Wandteil (7) der Radschüssel mindestens eine weitere konzentrische Belüftungslochreihe (8) ausgebildet ist, **dadurch gekennzeichnet, dass** die weitere Belüftungslochreihe zwischen Lochkreis (4) und Kümpel (2) ausgebildet ist.

2. Fahrzeugrad nach Anspruch 1,
**dadurch gekennzeichnet,**
**dass** die einzelnen Belüftungslöcher (5,8) im inneren Wandteil (7) bezogen auf den äußeren Wandteil (6) radial ausgerichtet sind.

3. Fahrzeugrad nach Anspruch 1,
**dadurch gekennzeichnet,**
**dass** die einzelnen Belüftungslöcher (5,8) im inneren Wandteil (7) bezogen auf den äußeren Wandteil (6) auf Lücke angeordnet sind.

4. Fahrzeugrad nach einem der vorstehenden Ansprüche,
**dadurch gekennzeichnet,**
**dass** die einzelnen Belüftungslöcher (5,8) im inneren Wandteil (7) bezogen auf den äußeren Wandteil (6) auf einer Linie oder in einem Winkel zueinander versetzt sind.

5. Fahrzeugrad nach einem der vorstehenden Ansprüche,
**dadurch gekennzeichnet,**
**dass** das Verhältnis der Belüftungslochfläche auf dem inneren Wandteil zu der auf dem äußeren Wandteil 0,5 bis 0,6 : 1 ist.

6. Fahrzeugrad nach den Ansprüchen 1-5,
**dadurch gekennzeichnet,**
**dass** die Belüftungslöcher (5,8) eine kreisrunde oder ovale Form aufweisen oder von Radmitte zu Radaußenseite konisch mit kontinuierlich veränderlichem und/oder diskontinuierlichem Querschnitt ausgeführt sind.

7. Fahrzeugrad nach den Ansprüchen 1-6,
**dadurch gekennzeichnet,**
**dass** die Radschüssel als TailoredWeldedBlank und/oder TailoredRolledBlank ausgeführt ist, wobei der innere Wandteil (7) andere Eigenschaften aufweist als der äußere Wandteil (6), insbesondere durch unterschiedliche Werkstoffe und/oder unterschiedliche Materialstärken.

8. **Fahrzeugrad nach einem der vorstehenden Ansprüche 1-7,**
**dadurch gekennzeichnet,**
**dass der metallische Werkstoff Stahl ist.**

## Claims

1. Vehicle wheel, having a rim band (1) and a wheel dish (2, 6, 7), the wheel dish having a central hole (3) for receiving a wheel hub with hole circle (4) disposed concentrically thereto for disposing the stud bolts, and also a flange (2), which subdivides the wheel dish into an inner wall part (7) which is turned towards the hub and an outer wall part (6) which is turned towards the rim band, a concentric ventilation hole row (5) being provided in the outer wall part (6), wherein
the wheel dish (2, 6, 7) is configured with a circumferential flange for attaching to the rim band (1) and consists of a metallic material and at least one further concentric ventilation hole row (8) is configured in the inner wall part (7) of the wheel dish, **characterised in that** the further ventilation hole row is configured between hole circle (4) and flange (2).

2. Vehicle wheel according to claim 1,
**characterised in that**
the individual ventilation holes (5, 8) in the inner wall part (7) are orientated radially relative to the outer wall part (6).

3. Vehicle wheel according to claim 1,
**characterised in that**
the individual ventilation holes (5, 8) in the inner wall part (7) are disposed at gaps relative to the outer wall part (6).

4. Vehicle wheel according to one of the preceding claims,
**characterised in that**
the individual ventilation holes (5, 8) in the inner wall part (7), relative to the outer wall part (6), are offset on a line or at an angle relative to each other.

5. Vehicle wheel according to one of the preceding claims,
**characterised in that**
the ratio of the ventilation hole area on the inner wall part to that on the outer wall part is 0.5 to 0.6 : 1.

6. Vehicle wheel according to claims 1 - 5,
**characterised in that**
the ventilation holes (5, 8) have a circular or oval shape or are configured conically from the wheel centre to the wheel outer side with continuously changing and/or discontinuous cross-section.

7. Vehicle wheel according to claims 1 - 6,
**characterised in that**
the wheel dish is configured as Tailored Welded Blank and/or Tailored Rolled Blank, the inner wall part (7) having different properties from the outer wall part (6), in particular by means of different materials and/or different material thicknesses.

8. **Vehicle wheel according to one of the preceding claims 1 - 7,**
**characterised in that**
**the metallic material is steel.**

## Revendications

1. Roue de véhicule, comprenant un ruban de fond de jante (1) et un disque de roue (2, 6, 7), dans laquelle le disque de roue comprend un trou central (3) pour recevoir un moyeu de roue avec un cercle de boulonnage (4) disposé de manière concentrique autour de celui-ci pour disposer les goujons filetés, ainsi qu'un élément embouti (2), qui divise le disque de roue en une partie de paroi intérieure (7) tournée vers le moyeu de roue et une partie de paroi extérieure (6) tournée vers le ruban de fond de jante, dans laquelle une rangée concentrique de trous de ventilation (5) est prévue dans la partie de paroi extérieure (6),
dans laquelle
le disque de roue (2, 6, 7) est réalisé avec une bride périphérique pour le raccordement au ruban de fond de jante (1) et est constitué d'un matériau métallique et au moins une autre rangée concentrique de trous de ventilation (8) est réalisée dans la partie de paroi intérieure (7) du disque de roue, **caractérisée en ce que** l'autre rangée de trous de ventilation est réalisée entre le cercle de trous (4) et l'élément embouti (2).

2. Roue de véhicule selon la revendication 1,
**caractérisée en ce**
**que** les différents trous de ventilation (5, 8) dans la partie de paroi intérieure (7) sont alignés radialement par rapport à la partie de paroi extérieure (6).

3. Roue de véhicule selon la revendication 1,
**caractérisée en ce**
**que** les différents trous de ventilation (5, 8) dans la partie de paroi intérieure (7) sont disposés en quinconce par rapport à la partie de paroi extérieure (6).

4. Roue de véhicule selon l'une quelconque des revendications précédentes,
**caractérisée en ce**
**que** les différents trous de ventilation (5, 8)dans la partie de paroi intérieure (7) sont décalés les uns des autres sur une ligne ou selon un angle par rapport à la partie de paroi extérieure (6).

5. Roue de véhicule selon l'une quelconque des revendications précédentes,
**caractérisée en ce**
**que** le rapport de la surface de trous de ventilation sur la partie de paroi intérieure à celle sur la partie de paroi extérieure est 0,5 à 0,6:1.

6. Roue de véhicule selon les revendications 1-5,
**caractérisée en ce**
**que** les trous de ventilation (5, 8) présentent une forme circulaire ou ovale ou sont réalisés de manière conique à partir du centre de la roue vers la face extérieure de la roue avec une section transversale variable en continu et/ou discontinue.

7. Roue de véhicule selon les revendications 1-6,
**caractérisée en ce**
**que** le disque de roue est réalisé en tant qu'ébauche soudée coupée sur mesure et/ou ébauche laminée coupée sur mesure, dans laquelle la partie de paroi intérieure (7) présente d'autres propriétés que la partie de paroi extérieure (6), en particulier du fait de matériaux différents et/ou d'épaisseurs de matériau différentes.

8. Roue de véhicule selon l'une quelconque des revendications 1-7,
**caractérisée en ce**
**que** le matériau métallique est l'acier.
